# EUROPEAN PATENT SPECIFICATION

(11) **EP 2 822 221 B1**
(45) Date of publication and mention of the grant of the patent: **28.12.2016**
(21) Application number: 13807887.8
(22) Date of filing: 12.10.2013
(51) Int. Cl.: H04L 29/12, H04L 12/28, H04L 12/54

(54) **PROCESSING METHOD AND PROCESSING DEVICE FOR AUTOMATICALLY SETTING NETWORK ACCESS MODE**
VERARBEITUNGSVERFAHREN UND VERARBEITUNGSVORRICHTUNG ZUM AUTOMATISCHEN EINSTELLEN EINES NETZWERKZUGANGSMODUS
PROCÉDÉ DE TRAITEMENT ET DISPOSITIF DE TRAITEMENT SERVANT AU RÉGLAGE AUTOMATIQUE DU MODE D'ACCÈS RÉSEAU

(30) Priority: 29.01.2013 CN 201310033246
(43) Date of publication of application: 07.01.2015
(73) Proprietor: Huawei Device Co., Ltd., Shenzhen, Guangdong 518129 (CN)
(72) Inventor: CHEN, Zhenwei, Shenzhen Guangdong 518129 (CN); WEI, Tao, Shenzhen Guangdong 518129 (CN)
(74) Representative: Pfenning, Meinig & Partner mbB
(86) International application number: PCT/CN2013/085120
(87) International publication number: WO 2014/117538

(56) References cited:
- WO-A1-03/088543
- CN-A- 1 668 007
- CN-A- 102 811 164
- JP-A- 2006 014 169
- US-A1- 2004 105 444
- US-A1- 2008 162 702

## Description

### TECHNICAL FIELD

Embodiments of the present invention relate to communications technologies, and in particular, to a processing method and processing device for automatically setting an Internet access mode.

### BACKGROUND

The Point-to-Point Protocol over Ethernet (Point-to-Point Protocol over Ethernet, PPPoE) is a network tunneling protocol for encapsulating a Point-to-Point Protocol (Point-to-Point Protocol, PPP) in an Ethernet framework. A terminal may access the Internet by PPPoE dial-up.

The Dynamic Host Configuration Protocol (Dynamic Host Configuration Protocol, DHCP) may allocate an IP address to a terminal, so that the terminal accesses the Internet by using an upstream router.

An existing type of terminal may access the Internet in a PPPoE mode or a DHCP mode. During automatic detection, the terminal may separately send a PPPoE request message and a DHCP request message; when a response message corresponding to one of the request messages is received first, determine the mode as an Internet access mode, and stop the detection of the other mode. When a DHCP server and the terminal are located in a same local area network, and the PPPoE server is located in a network constructed by an operator, the DHCP server is closer to the terminal; therefore, the terminal receives a DHCP response message first, and in this case, the terminal determines that the Internet access mode is the DHCP mode and stops the detection of the PPPoE mode. However, if the DHCP server is not connected to the Internet in the upstream direction, the terminal is unable to use the DHCP mode to access the Internet but may access the Internet in the PPPoE mode.

Patent Application US 2004/0105444 A1 discloses a method for auto-configuring broadband devices for one of a plurality of network communication protocols.

Therefore, in the prior art, stopping the detection of the other mode after the response message in one mode is received may cause inaccurate determination of the mode.

### SUMMARY

In view of this, embodiments of the present invention provide a processing method and processing device for automatically setting an Internet access mode, which are used to improve accuracy of mode detection.

According to a first aspect, a processing method for automatically setting an Internet access mode is provided and includes:
separately sending a Point-to-Point Protocol over Ethernet PPPoE request message and a Dynamic Host Configuration Protocol DHCP request message;
if a DHCP response message corresponding to the DHCP request message is received first within a set time, determining that the Internet access mode is a DHCP mode; and
if a PPPoE response message corresponding to the PPPoE request message is received later within the set time, determining that the Internet access mode switches from the DHCP mode to a PPPoE mode.

According to the first aspect, in a first possible implementation manner of the first aspect, after the separately sending the PPPoE request message and the DHCP request message, the method further includes:
if the PPPoE response message is received first within the set time, determining that the Internet access mode is the PPPoE mode, and stopping sending the DHCP request message.

According to the first aspect, in a second possible implementation manner of the first aspect, after the determining that the Internet access mode switches from the DHCP mode to the PPPoE mode, the method further includes:
performing dial-up in the PPPoE mode; and
after the dial-up in the PPPoE mode fails, determining that the Internet access mode switches back from the PPPoE mode to the DHCP mode.

According to the first aspect or the first or second possible implementation manner of the first aspect, in a third possible implementation manner of the first aspect, after the separately sending the PPPoE request message and the DHCP request message, the method further includes:
if the PPPoE response message and the DHCP response message are not received within the set time, determining that detection of the Internet access mode fails.

According to the first aspect or any one of the first to third possible implementations manners of the first aspect, in a fourth possible implementation manner of the first aspect, the separately sending the PPPoE request message and the DHCP request message includes:
with an exponential multiple of two as a time interval, sending the PPPoE request message at intervals, and with an exponential multiple of two as a time interval, sending the DHCP request message at intervals.

According to a second aspect, a processing device is provided and includes:
a receiving and sending module, configured to separately send a Point-to-Point Protocol over Ethernet PPPoE request message and a Dynamic Host Configuration Protocol DHCP request message, and receive a DHCP response message corresponding to the DHCP request message and a PPPoE response message corresponding to the PPPoE request message; and
a processing module, configured to: if determining that the receiving and sending module first receives the DHCP response message corresponding to the DHCP request message within a set time, determine that an Internet access mode is a DHCP mode; and
if determining that the receiving and sending module later receives the PPPoE response message corresponding to the PPPoE request message within the set time, determine that the Internet access mode switches from the DHCP mode to a PPPoE mode.

According to the second aspect, in a first possible implementation manner of the second aspect, the processing module is further configured to:
if determining that the receiving and sending module first receives the PPPoE response message within the set time, determine that the Internet access mode is the PPPoE mode, and control the receiving and sending module to stop sending the DHCP request message.

According to the second aspect, in a second possible implementation manner of the second aspect, after determining that the Internet access mode switches from the DHCP mode to the PPPoE mode, the processing module is further configured to:
perform dial-up in the PPPoE mode; and
after the dial-up in the PPPoE mode fails, determine that the Internet access mode switches back from the PPPoE mode to the DHCP mode.

According to the second aspect or the first or second possible implementation manner of the second aspect, in a third possible implementation manner of the second aspect, the processing module is further configured to:
if determining that the receiving and sending module does not receive the PPPoE response message or the DHCP response message within the set time, determine that detection of the Internet access mode fails.

According to the second aspect or any one of the first to third possible implementation manners of the second aspect, in a fourth possible implementation manner of the second aspect, the processing module is further configured to:
with an exponential multiple of two as a time interval, send the PPPoE request message at intervals, and with an exponential multiple of two as a time interval, send the DHCP request message at intervals.

According to the foregoing technical solutions, in the embodiments of the present invention, after the DHCP response message is received, the sending of the PPPoE request message is not stopped, that is, the sending of the PPPoE request message is continued; and after the PPPoE response message is received within the set time, the DHCP mode is switched to the PPPoE mode. In other words, in the embodiments of the present invention, after the DHCP response message is received, the detection of the PPPoE mode is not stopped, and the DHCP mode may be switched to the PPPoE mode; therefore, preference of the detection of the PPPoE mode is realized. Because Internet access in the PPPoE mode is more likely to be successful than Internet access in the DHCP mode, the solution to preferentially detecting the PPPoE mode according to the embodiments of the present invention may reduce incorrect determination of mode detection, reduce the possibility of unavailability of network services, and improve user experience.

### BRIEF DESCRIPTION OF DRAWINGS

To describe technical solutions in embodiments of the present invention more clearly, the following briefly introduces the accompanying drawings required for describing the embodiments. Apparently, the accompanying drawings in the following description show some embodiments of the present invention, and a person of ordinary skill in the art may still derive other drawings from these accompanying drawings without creative efforts.
FIG. 1 is a schematic structural diagram of a system in which a terminal accesses the Internet according to an embodiment of the present invention;
FIG. 2 is a schematic flowchart of a processing method for automatically setting an Internet access mode according to an embodiment of the present invention;
FIG. 3 is a schematic flowchart of another processing method for automatically setting an Internet access mode according to an embodiment of the present invention;
FIG. 4 is a schematic structural diagram of a processing device for automatically setting an Internet access mode according to an embodiment of the present invention; and
FIG. 5 is a schematic structural diagram of another processing device for automatically setting an Internet access mode according to an embodiment of the present invention.

### DESCRIPTION OF EMBODIMENTS

To make the objectives, technical solutions, and advantages of the embodiments of the present invention more clearly, the following clearly and completely describes the technical solutions in the embodiments of the present invention with reference to the accompanying drawings in the embodiments of the present invention. Apparently, the described embodiments are a part rather than all of the embodiments of the present invention. The invention is carried out according to the appended independent claims. Optional features of the invention are carried out according to the appended dependent claims.

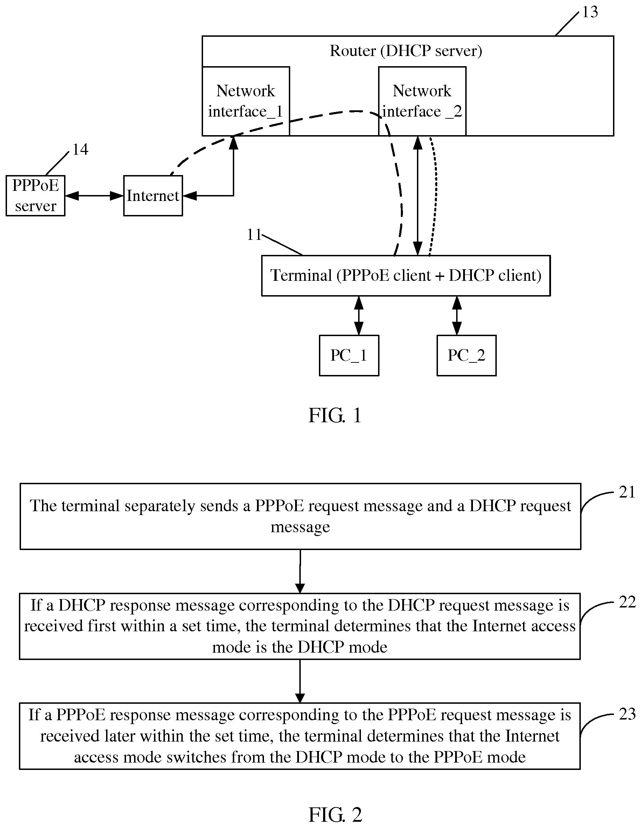

As shown in FIG. 1, a terminal 11 accesses a network interface_2 of a router 13, and a network interface _1 of the router 13 accesses the Internet. The terminal 11 may provide an Internet access service for a PC_1 and a PC_2. The terminal 11 may be a device in a fixed network, such as a mobile broadband Internet card, or the terminal 11 may be a device in a mobile network, such as a mobile phone.

The terminal 11 may use a PPPoE mode or a DHCP mode to access the Internet, and at this time, the terminal 11 is provided with a PPPoE client and a DHCP client.

The router 13 integrates functions of a DHCP server.

In an automatic detection mode, the PPPoE client and the DHCP client of the terminal 11 separately and periodically send a request message, and specifically, separately send an active discovery initiation (PPPoE Active Discovery Initiation, PADI) message to a PPPoE server 14 and a discover (DHCP discover) message to a DHCP server, and corresponding response messages are respectively a PPPoE Active Discovery Offer (PPPoE Active Discovery Offer, PADO) message and a DHCP offer (DHCP offer) message. For example, the PPPoE client may send a PADI message to a PPPoE server, and after the PPPoE server receives the PADI message, the PPPoE server may respond to the PPPoE client with a PADO message; and the DHCP client may send a DHCP discover message to a DHCP server, and after the DHCP server receives the DHCP discover message, the DHCP server may respond to the DHCP client with a DHCP offer message.

In the prior art, when the PADO message is received first, the terminal 11 determines that an Internet access mode is a PPPoE mode, and stops sending the DHCP discover message; and when the DHCP offer message is received first, the terminal 11 determines that the Internet access mode is a DHCP mode, and stops sending the PADI message.

When the Internet access mode is determined to be the DHCP mode and the sending of the PADI message is stopped, and if the router 13 is not connected to the Internet in the upstream direction, the PPPoE client does not work in the DHCP mode and the terminal 11 is unable to access the Internet. However, at this time, the terminal 11 may access the Internet by using the PPPoE client. That is, the terminal 11 may access the Internet in the PPPoE mode. Therefore, determining the Internet access mode to be the DHCP mode in the prior art causes incorrect determination of mode detection. To reduce the incorrect determination of mode detection, the present invention provides the following embodiments.

FIG. 2 is a schematic flowchart of a processing method for automatically setting an Internet access mode according to an embodiment of the present invention. An application scenario of the embodiment may be: a terminal 11 can access the Internet in a DHCP mode and a PPPoE mode, and the terminal 11 determines, in an automatic setting manner, that an Internet access mode is the DHCP mode or the PPPoE mode. With reference to FIG. 2, this embodiment includes the following steps:
21. The terminal 11 separately sends a PPPoE request message and a DHCP request message.

The terminal 11 may include a PPPoE client and a DHCP client, where the PPPoE client may send a PPPoE request message to a PPPoE server, and the DHCP client may send a DHCP request message to a DHCP server.

The PPPoE request message may specifically be a PADI message, and the DHCP request message may specifically be a DHCP discover message.

The PPPoE request message and the DHCP request message may be sent at intervals, for example, optionally, with an exponential multiple of 2 as a time interval, the PPPoE request message is sent at intervals; and with an exponential multiple of 2 as a time interval, the DHCP request message is sent at intervals.

Specifically, the PPPoE request message and the DHCP request message are sent simultaneously. When the PPPoE request message and the DHCP request message are sent simultaneously, the time intervals for sending the PPPoE request message and the DHCP request message at each time are the same. For example, the PPPoE request message and the DHCP request message are sent simultaneously at a first time, the PPPoE request message and the DHCP request message are sent simultaneously at a second time after a time interval of one second, and the PPPoE request message and the DHCP request message are sent simultaneously at a third time after a time interval of two seconds. Alternatively, when the PPPoE request message and the DHCP request message are sent simultaneously, the time intervals for sending the PPPoE request message and the DHCP request message are different. For example, the PPPoE request message and the DHCP message are sent simultaneously at a first time, the PPPoE request message is sent at a second time after a time interval of 1 second, and the DHCP request message is sent at a second time after a time interval of two seconds. Alternatively, the PPPoE request message and the DHCP request message may also be sent non-simultaneously. For example, the PPPoE request message may be sent first, and then the DHCP request message is sent, or the DHCP request message is sent first, and then the PPPoE request message is sent; and then the PPPoE request message and the DHCP request message are sent at respective time intervals.
22. If a DHCP response message corresponding to the DHCP request message is received first within a set time, the terminal 11 determines that the Internet access mode is the DHCP mode.
23. If a PPPoE response message corresponding to the PPPoE request message is received later within the set time, the terminal 11 determines that the Internet access mode switches from the DHCP mode to the PPPoE mode.

As mentioned in 22, because the sending of the PPPoE request message is continued, a response message received later may be a PPPoE response message, that is, a DHCP response message is received, and a PPPoE response message is also received later; in this case, the Internet access mode switches from the DHCP mode to the PPPoE mode, for example, a field value corresponding to the Internet access mode is updated from a value indicating the DHCP mode to a value indicating the PPPoE mode.

The DHCP response message is a response message sent by the DHCP server after reception of the DHCP request message, and specifically may be the foregoing DHCP offer message.

In addition, the PPPoE response message is a response message sent by the PPPoE server after reception of the PPPoE request message, and specifically may be the foregoing PADO message.

The terminal 11 may set a time, such as 120 seconds, and the set time may be started after the terminal 11 sends the DHCP request message and the PPPoE request message. For example, the terminal 11 sends the PPPoE request message and the DHCP request message simultaneously, and then starts a timer, whose time may be set to 120 seconds. After a response message is received first within the set time, the terminal 11 may determine whether the response message is a DHCP response message or a PPPoE response message. For example, the terminal 11 may determine a DHCP response message or a PPPoE response message according to a type field of the received response message.

After determining that the response message received first within the set time is the DHCP response message, that is, the DHCP response message is first received within the set time, the terminal 11 may determine that the Internet access mode is the DHCP mode. For example, a field value corresponding to the Internet access mode is set to a value indicating the DHCP mode.

After determining the DHCP mode, the terminal 11 does not stop sending the PPPoE request message, that is, continues to send the PPPoE request message according to the set time interval in step 21.

Furthermore, optionally, the method may further include:
if the PPPoE response message is received first within the set time, determining that the Internet access mode is the PPPoE mode, and stopping sending the DHCP request message.

Alternatively, optionally, the method may further include:
if the PPPoE response message and the DHCP response message are not received within the set time, determining that detection of the Internet access mode fails.

Furthermore, optionally, the method may further include:
performing dial-up in the PPPoE mode; and
after the dial-up in the PPPoE mode fails, determining that the Internet access mode switches back from the PPPoE mode to the DHCP mode.

Different from the prior art where the sending of the PPPoE request message is stopped after the DHCP mode is determined, in the embodiment of the present invention, the sending of the PPPoE request message is continued, so that the preference of the PPPoE mode is achieved.

In this embodiment, after the DHCP response message is received, the sending of the PPPoE request message is continued; and after the PPPoE request message is received within the set time, the DHCP mode is switched to the PPPoE mode. In other words, in this embodiment of the present invention, after the DHCP response message is received, the detection of the PPPoE mode is not stopped, and the DHCP mode is switched to the PPPoE mode; therefore, the preference of the detection of the PPPoE mode is realized. Because Internet access in the PPPoE mode is more likely to be successful than Internet access in the DHCP mode, the solution to preferentially detecting the PPPoE mode according to the embodiment of the present invention may reduce incorrect determination of mode detection, reduce the possibility of unavailability of network services, and improve user experience.

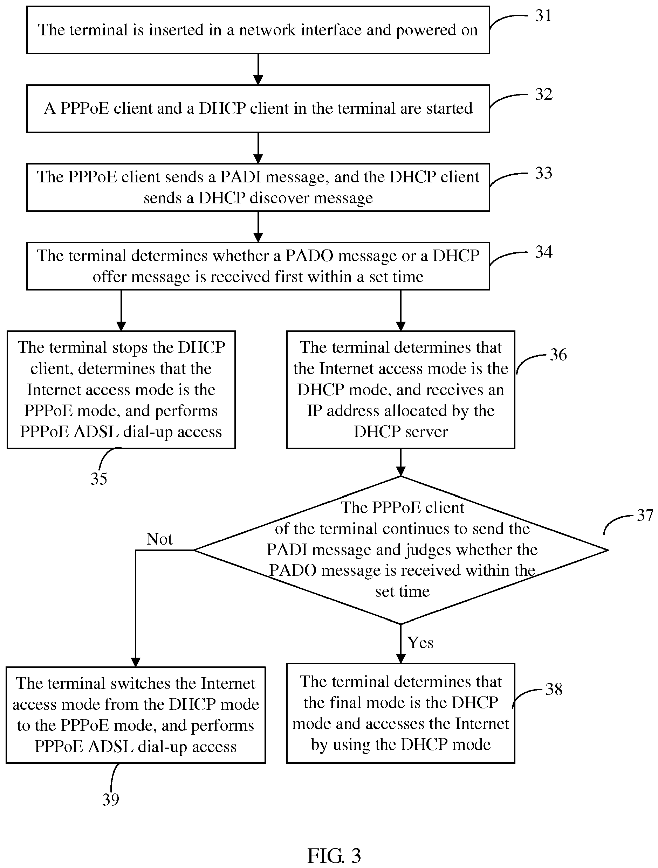

FIG. 3 is a schematic flowchart of another processing method for automatically setting an Internet access mode according to an embodiment of the present invention. The embodiment includes the following:
31. A terminal 11 is inserted in a network interface and powered on.
   For example, the terminal 11 is inserted in a network interface_2.
32. A PPPoE client and a DHCP client in the terminal 11 are started.
   For example, a PPPoE process and a DHCP process may be started through a Linux platform.
33. The PPPoE client sends a PADI message, and the DHCP client sends a DHCP discover (discover) message.
   The PADI message may be sent to a PPPoE server by the PPPoE client, and the DHCP discover message may be sent to a DHCP server by the DHCP client.
   For example, the PPPoE client may send the PADI message at a time interval which is an exponential multiple of two, such as one second, two seconds, four seconds, and eight seconds, the DHCP client may also send the DHCP discover message at a time interval which is an exponential multiple of two, such as one second, two seconds, four seconds, and eight seconds, and the start time for sending the PADI message and the DHCP message may be the same or different. According to the foregoing different time intervals, the network load may be reduced, and network congestion is avoided.
34. The terminal 11 determines whether a PADO message or a DHCP offer (offer) message is received first within a set time; and if the PADO message is received first, the terminal 11 performs 35; or if the DHCP offer message is received first, the terminal 11 performs 36.
   The PADO message is a response message corresponding to the PADI message, and the DHCP offer message is a response message corresponding to the DHCP discover message. The terminal 11 may determine, according to a type field of the response message received first, whether the PADO message or the DHCP offer message is received first.
35. The terminal 11 stops the DHCP client, determines that the Internet access mode is a PPPoE mode, and performs PPPoE asymmetrical digital subscriber loop (Asymmetrical Digital Subscriber Loop, ADSL) dial-up access.
   That is, after the PADO message is received first, the terminal 11 determines that the Internet access mode is the PPPoE mode.
36. The terminal 11 determines that the Internet access mode is a DHCP mode, and receives an IP address allocated by the DHCP server.
37. The PPPoE client of the terminal 11 continues to send the PADI message and determines whether the PADO message is received within the set time; and if yes, the terminal 11 performs 38; or otherwise, the terminal 11 performs 39.
   For example, the set time may be set to 120 seconds.
38. The terminal 11 switches the Internet access mode from the DHCP mode to the PPPoE mode, and performs PPPoE ADSL dial-up access.
39. The terminal 11 determines that the final mode is the DHCP mode and accesses the Internet in the DHCP mode.

For example, in the DHCP mode, the terminal 11 may establish a connection with a router 13 including the DHCP server, but the router 13 including the DHCP server has established a connection with a network side in advance; therefore, after the DHCP server allocates an IP address to the terminal 11, the terminal 11 can access the Internet.

Optionally, in step 34, neither the PADO message nor the DHCP offer message is received within the set time, such as 120 seconds, and in this case, it is determined that the detection fails.

Optionally, in step 38, after the terminal 11 performs PPPoE ADSL dial-up access, the dial-up may succeed and may also fail; when the dial-up succeeds, the terminal 11 may access the Internet in the PPPoE mode; and when the dial-up fails, the terminal 11 may switch the Internet access mode back from the PPPoE mode to the DHCP mode and access the Internet in the DHCP mode. It may be understood that Internet access in the DHCP mode may also succeed or fail, for example, after the DHCP server successfully accesses an Internet side server (which may be the PPPoE server, and may also be another server), the terminal may access the Internet through the DHCP server; or otherwise, if the DHCP server does not access the Internet side server, the terminal fails to access the Internet in the DHCP mode.

According to this embodiment, the detection of the PPPoE mode is continued after the DHCP mode is determined; therefore, incorrect determination of mode detection may be reduced, unavailability of network services is reduced, and user experience is improved. The time may be set according to an actual scenario, for example, a smaller value may be set in an experimental environment, and a larger value may be set in a complex network environment, thereby meeting actual requirements and improving the accuracy of detection.

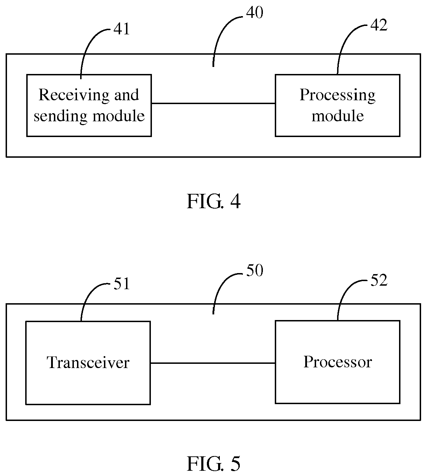

FIG. 4 is a schematic structural diagram of a processing device for automatically setting an Internet access mode according to an embodiment of the present invention, where the device may be a terminal capable of accessing the Internet in a PPPoE mode or a DHCP mode. The terminal 40 includes a receiving and sending module 41 and a processing module 42. The receiving and sending module 41 is configured to separately send a PPPoE request message and a DHCP request message, and receive a DHCP response message corresponding to the DHCP request message and a PPPoE response message corresponding to the PPPoE request message; and the processing module 42 is configured to determine that an Internet access mode is a DHCP mode if determining that the receiving and sending module 41 first receives the DHCP response message corresponding to the DHCP request message within a set time, and determine that the Internet access mode switches from the DHCP mode to a PPPoE mode if determining that the receiving and sending module 41 later receives the PPPoE response message corresponding to the PPPoE request message within the set time.

Optionally, the processing module 42 is further configured to: if determining that the receiving and sending module 41 first receives the PPPoE response message within the set time, determine that the Internet access mode is the PPPoE mode, and control the receiving and sending module 41 to stop sending the DHCP request message.

Optionally, after determining that the Internet access mode switches from the DHCP mode to the PPPoE mode, the processing module 42 is further configured to:
perform dial-up in the PPPoE mode; and
after the dial-up in the PPPoE mode fails, determine that the Internet access mode switches back from the PPPoE mode to the DHCP mode.

Optionally, the processing module 42 is further configured to:
if determining that the receiving and sending module 41 does not receive the PPPoE response message or the DHCP response message within the set time, determine that detection of the Internet access mode fails.

Optionally, the receiving and sending module is specifically configured to:
with an exponential multiple of two as a time interval, send the PPPoE request message at intervals, and with an exponential multiple of two as a time interval, send the DHCP request message at intervals.

As shown in FIG. 5, another device provided by the embodiments of the present invention may be a terminal with a PPPoE mode and a DHCP mode. The terminal 50 includes a transceiver 51 and a processor 52. The transceiver 51 is configured to separately send a PPPoE request message and a DHCP request message, and receive a DHCP response message corresponding to the DHCP request message and a PPPoE response message corresponding to the PPPoE request message; and the processor 52 is specifically configured to determine that an Internet access mode is a DHCP mode if determining that the transceiver 51 first receives the DHCP response message corresponding to the DHCP request message within a set time, and determine that the Internet access mode switches from the DHCP mode to a PPPoE mode if determining that the transceiver 51 later receives the PPPoE response message corresponding to the PPPoE request message within the set time.

Optionally, the processor 52 is further configured to: if determining that the transceiver 51 first receives the PPPoE response message within the set time, determine that the Internet access mode is the PPPoE mode, and control the transceiver 51 to stop sending the DHCP request message.

Optionally, after determining that the Internet access mode switches from the DHCP mode to the PPPoE mode, the processor 52 is further configured to: perform dial-up in the PPPoE mode; and after the dial-up in the PPPoE mode fails, determine that the Internet access mode switches back from the PPPoE mode to the DHCP mode.

Optionally, the processor 52 is further configured to: if determining that the transceiver 51 does not receive the PPPoE response message or the DHCP response message within the set time, determine that detection of the Internet access mode fails.

Optionally, the transceiver 51 is specifically configured to: with an exponential multiple of two as a time interval, send the PPPoE request message at intervals, and with an exponential multiple of two as a time interval, send the DHCP request message at intervals.

The foregoing processor may be a central processing unit (CPU), a microprocessor, a single-chip microcomputer and the like. Furthermore, the device may further include a memory, an input/output apparatus, a timer, and the like.

In this embodiment, after the DHCP response message is received, the sending of the PPPoE request message is continued; and after the PPPoE response message is received within the set time, the DHCP mode is switched to the PPPoE mode. In other words, in this embodiment of the present invention, after the DHCP response message is received, the detection of the PPPoE mode is not stopped, and the DHCP mode is switched to the PPPoE mode; therefore, the preference of the detection of the PPPoE mode is realized. Because Internet access in the PPPoE mode is more likely to be successful than Internet access in the DHCP mode, the solution to preferentially detecting the PPPoE mode according to the embodiment of the present invention may reduce incorrect determination of mode detection, reduce the possibility of unavailability of network services, and improve user experience.

It may be clearly understood by a person skilled in the art that, for the purpose of convenient and brief description, only division of the functional modules is used as an example for description. In actual applications, the functions may be allocated to different functional modules for completion according to requirements, that is, the internal structure of an apparatus is divided into different functional modules for completing all or a part of the foregoing functions. For a detailed working process of the foregoing system, apparatus, and unit, reference may be made to a corresponding process in the foregoing method embodiments, and details are not described here again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or a part of the technical solutions may be implemented in the form of a software product. The computer software product is stored in a storage medium and includes several instructions for instructing a computer device (which may be a personal computer, a server, a network device, and the like) or a processor (processor) to execute all or a part of the steps of the methods described in the embodiments of the present application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing embodiments are merely intended for describing the technical solutions of the present application other than limiting the present application. Although the present application is described in detail with reference to the foregoing embodiments, persons of ordinary skill in the art should understand that they can still make modifications to the technical solutions described in the foregoing embodiments or make equivalent substitutions to some technical features thereof, without departing from the scope of the technical solutions of the embodiments of the present invention.

## Claims

1. A processing method for automatically setting an Internet access mode, comprising:
separately sending a Point-to-Point Protocol over Ethernet PPPoE request message and a Dynamic Host Configuration Protocol DHCP request message;
if a DHCP response message corresponding to the DHCP request message is received first within a set time, determining that the Internet access mode is a DHCP mode;
**characterised in that**
if a PPPoE response message corresponding to the PPPoE request message is received later within the set time, determining that the Internet access mode switches from the DHCP mode to a PPPoE mode.

2. The method according to claim 1, wherein, after the separately sending the PPPoE request message and the DHCP request message, the method further comprises:
if the PPPoE response message is received first within the set time, determining that the Internet access mode is the PPPoE mode, and stopping sending the DHCP request message.

3. The method according to claim 1, wherein, after the determining that the Internet access mode switches from the DHCP mode to the PPPoE mode, the method further comprises:
performing dial-up in the PPPoE mode; and
after the dial-up in the PPPoE mode fails, determining that the Internet access mode switches back from the PPPoE mode to the DHCP mode.

4. The method according to any one of claims 1 to 3, wherein, after the separately sending the PPPoE request message and the DHCP request message, the method further comprises:
if the PPPoE response message and the DHCP response message are not received within the set time, determining that detection of the Internet access mode fails.

5. The method according to any one of claims 1 to 4, wherein the separately sending the PPPoE request message and the DHCP request message comprises:
with an exponential multiple of two as a time interval, sending the PPPoE request message at intervals, and with an exponential multiple of two as a time interval, sending the DHCP request message at intervals.

6. A processing device, comprising:
a receiving and sending module, configured to separately send a Point-to-Point Protocol over Ethernet PPPoE request message and a Dynamic Host Configuration Protocol DHCP request message, and receive a DHCP response message corresponding to the DHCP request message and a PPPoE response message corresponding to the PPPoE request message; and
**characterised by**
a processing module, configured to: if determining that the receiving and sending module first receives the DHCP response message corresponding to the DHCP request message within a set time, determine that an Internet access mode is a DHCP mode; and
if determining that the receiving and sending module later receives the PPPoE response message corresponding to the PPPoE request message within the set time, determine that the Internet access mode switches from the DHCP mode to a PPPoE mode.

7. The device according to claim 6, wherein the processing module is further configured to:
if determining that the receiving and sending module first receives the PPPoE response message within the set time, determine that the Internet access mode is the PPPoE mode, and control the receiving and sending module to stop sending the DHCP request message.

8. The device according to claim 6, wherein, after determining that the Internet access mode switches from the DHCP mode to the PPPoE mode, the processing module is further configured to:
perform dial-up in the PPPoE mode; and
after the dial-up in the PPPoE mode fails, determine that the Internet access mode switches back from the PPPoE mode to the DHCP mode.

9. The device according to any one of claims 6 to 8, wherein the processing module is further configured to:
if determining that the receiving and sending module does not receive the PPPoE response message or the DHCP response message within the set time, determine that detection of the Internet access mode fails.

10. The device according to any one of claims 6 to 9, wherein the receiving and sending module is further configured to:
with an exponential multiple of two as a time interval, send the PPPoE request message at intervals, and with an exponential multiple of two as a time interval, send the DHCP request message at intervals.

## Patentansprüche

1. Verarbeitungsverfahren zum automatischen Einstellen eines Internet-Zugangsmodus, das Folgendes umfasst:
getrenntes Senden einer Punkt-zu-Punkt-Protokoll-über-Ethernet-Anfragenachricht bzw. PPPoE-Anfragenachricht und einer Dynamischen-Host-Konfigurations-Protokoll-Anfragenachricht bzw. DHCP-Anfragenachricht;
falls eine DHCP-Antwortnachricht, die der DHCP-Anfragenachricht entspricht, innerhalb einer eingestellten Zeit zuerst empfangen wird, Bestimmen, dass der Internet-Zugangsmodus ein DHCP-Modus ist;
**dadurch gekennzeichnet, dass**,
falls eine PPPoE-Antwortnachricht, die der PPPoE-Anfragenachricht entspricht, innerhalb der eingestellten Zeit später empfangen wird, Bestimmen, dass der Internet-Zugangsmodus vom DHCP-Modus zu einem PPPoE-Modus wechselt.

2. Verfahren nach Anspruch 1, wobei, nach dem getrennten Senden der PPPoE-Anfragenachricht und der DHCP-Anfragenachricht, das Verfahren ferner Folgendes umfasst:
falls die PPPoE-Antwortnachricht innerhalb einer eingestellten Zeit zuerst empfangen wird, Bestimmen, dass der Internet-Zugangsmodus der PPPoE-Modus ist, und Anhalten des Sendens der DHCP-Anfragenachricht.

3. Verfahren nach Anspruch 1, wobei, nach dem Bestimmen, dass der Internet-Zugangsmodus vom DHCP-Modus zum PPPoE-Modus wechselt, das Verfahren ferner Folgendes umfasst:
Durchführen von Einwählen im PPPoE-Modus; und
nachdem das Einwählen im PPPoE-Modus fehlgeschlagen ist, Bestimmen, dass der Internet-Zugangsmodus vom PPPoE-Modus zum DHCP-Modus zurückwechselt.

4. Verfahren nach einem der Ansprüche 1 bis 3, wobei, nach dem getrennten Senden der PPPoE-Anfragenachricht und der DHCP-Anfragenachricht, das Verfahren ferner Folgendes umfasst:
falls die PPPoE-Antwortnachricht und die DHCP-Antwortnachricht nicht innerhalb der eingestellten Zeit empfangen werden, Bestimmen, dass Detektion des Internet-Zugangsmodus fehlgeschlagen ist.

5. Verfahren nach einem der Ansprüche 1 bis 4, wobei das getrennte Senden der PPPoE-Anfragenachricht und der DHCP-Anfragenachricht Folgendes umfasst:
mit einem exponentiellen Vielfachen von zwei als ein Zeitintervall, Senden der PPPoE-Anfragenachricht in Intervallen, und mit einem exponentiellen Vielfachen von zwei als ein Zeitintervall, Senden der DHCP-Anfragenachricht in Intervallen.

6. Verarbeitungsvorrichtung, die Folgendes umfasst:
ein Empfangs- und Sendemodul, das ausgelegt ist zum getrennten Senden einer Punkt-zu-Punkt-Protokoll-über-Ethernet-Anfragenachricht bzw. PPPoE-Anfragenachricht und einer Dynamischen-Host-Konfigurations-Protokoll-Anfragenachricht bzw. DHCP-Anfragenachricht und zum Empfangen einer DHCP-Antwortnachricht, die der DHCP-Anfragenachricht entspricht, und einer PPPoE-Antwortnachricht, die der PPPoE-Anfragenachricht entspricht; und
**gekennzeichnet durch**
ein Verarbeitungsmodul, das ausgelegt ist zum:
falls bestimmt wird, dass das Empfangs- und Sendemodul die DHCP-Antwortnachricht, die der DHCP-Anfragenachricht entspricht, innerhalb einer eingestellten Zeit zuerst empfängt, Bestimmen, dass ein Internet-Zugangsmodus ein DHCP-Modus ist; und
falls bestimmt wird, dass das Empfangs- und Sendemodul die PPPoE-Antwortnachricht, die der PPPoE-Anfragenachricht entspricht, innerhalb der eingestellten Zeit später empfängt, Bestimmen, dass der Internet-Zugangsmodus vom DHCP-Modus zu einem PPPoE-Modus wechselt.

7. Vorrichtung nach Anspruch 6, wobei das Verarbeitungsmodul ferner ausgelegt ist zum:
falls bestimmt wird, dass das Empfangs- und Sendemodul die PPPoE-Antwortnachricht innerhalb der eingestellten Zeit zuerst empfängt, Bestimmen, dass der Internet-Zugangsmodus der PPPoE-Modus ist, und Steuern des Empfangs- und -Sendemoduls zum Anhalten des Sendens der DHCP-Anfragenachricht.

8. Vorrichtung nach Anspruch 6, wobei, nach dem Bestimmen, dass der Internet-Zugangsmodus vom DHCP-Modus zum PPPoE-Modus wechselt, das Verarbeitungsmodul ferner ausgelegt ist zum:
Durchführen von Einwählen im PPPoE-Modus; und
nachdem das Einwählen im PPPoE-Modus fehlgeschlagen ist, Bestimmen, dass der Internet-Zugangsmodus vom PPPoE-Modus zum DHCP-Modus zurückwechselt.

9. Vorrichtung nach einem der Ansprüche 6 bis 8, wobei das Verarbeitungsmodul ferner ausgelegt ist zum:
falls bestimmt wird, dass das Empfangs- und Sendemodul die PPPoE-Antwortnachricht oder die DHCP-Antwortnachricht nicht innerhalb der eingestellten Zeit empfängt, Bestimmen, dass Detektion des Internet-Zugangsmodus fehlgeschlagen ist.

10. Vorrichtung nach einem der Ansprüche 6 bis 9, wobei das Empfangs- und Sendemodul ferner ausgelegt ist zum:
mit einem exponentiellen Vielfachen von zwei als ein Zeitintervall, Senden der PPPoE-Anfragenachricht in Intervallen, und mit einem exponentiellen Vielfachen von zwei als ein Zeitintervall, Senden der DHCP-Anfragenachricht in Intervallen.

## Revendications

1. Procédé de traitement permettant de paramétrer automatiquement un mode d'accès Internet, comprenant les étapes suivantes :
envoyer séparément un message de requête de protocole point à point sur Ethernet PPPoE et un message de requête de protocole de configuration d'hôte dynamique DHCP;
si un message de réponse DHCP correspondant au message de requête DHCP est reçu en premier dans un temps défini, déterminer que le mode d'accès Internet est un mode DHCP ; **caractérisé en ce que**
si un message de réponse PPPoE correspondant au message de requête PPPoE est reçu plus tard dans le temps défini, déterminer que le mode d'accès Internet passe du mode DHCP à un mode PPPoE.

2. Procédé selon la revendication 1 dans lequel, après l'étape consistant à envoyer séparément le message de requête PPPoE et le message de requête DHCP, le procédé comprend en outre :
si le message de réponse PPPoE est reçu en premier dans le temps défini, déterminer que le mode d'accès Internet est le mode PPPoE, et arrêter l'envoi du message de requête DHCP.

3. Procédé selon la revendication 1 dans lequel, après l'étape consistant à déterminer que le mode d'accès Internet passe du mode DHCP au mode PPPoE, le procédé comprend en outre :
exécuter un accès commuté dans le mode PPPoE ; et
après que l'accès commuté dans le mode PPPoE a échoué, déterminer que le mode d'accès Internet repasse du mode PPPoE au mode DHCP.

4. Procédé selon l'une quelconque des revendications 1 à 3 dans lequel, après l'étape consistant à envoyer séparément le message de requête PPPoE et le message de requête DHCP, le procédé comprend en outre :
si le message de réponse PPPoE et le message de réponse DHCP ne sont pas reçus dans le temps défini, déterminer qu'une détection du mode d'accès Internet a échoué.

5. Procédé selon l'une quelconque des revendications 1 à 4, dans lequel l'étape consistant à envoyer séparément le message de requête PPPoE et le message de requête DHCP comprend :
avec un multiple exponentiel de deux comme intervalle de temps, envoyer le message de requête PPPoE à intervalles, et avec un multiple exponentiel de deux comme intervalle de temps, envoyer le message de requête DHCP à intervalles.

6. Dispositif de traitement, comprenant :
un module de réception et d'envoi, configuré pour envoyer séparément un message de requête de protocole point à point sur Ethernet PPPoE et un message de requête de protocole de configuration d'hôte dynamique DHCP, et recevoir un message de réponse DHCP correspondant au message de requête DHCP et un message de réponse PPPoE correspondant au message de requête PPPoE ; et
**caractérisé par**
un module de traitement, configuré pour : s'il est déterminé que le module de réception et d'envoi reçoit d'abord le message de réponse DHCP correspondant au message de requête DHCP dans un temps défini, déterminer qu'un mode d'accès Internet est un mode DHCP ; et
s'il est déterminé que le module de réception et d'envoi reçoit plus tard le message de réponse PPPoE correspondant au message de requête PPPoE dans le temps défini,
déterminer que le mode d'accès Internet passe du mode DHCP à un mode PPPoE.

7. Dispositif selon la revendication 6, dans lequel le module de traitement est en outre configuré pour :
s'il est déterminé que le module de réception et d'envoi reçoit d'abord le message de réponse PPPoE dans le temps défini, déterminer que le mode d'accès Internet est le mode PPPoE, et commander le module de réception et d'envoi pour arrêter l'envoi du message de requête DHCP.

8. Dispositif selon la revendication 6 dans lequel, après avoir déterminé que le mode d'accès Internet passe du mode DHCP au mode PPPoE, le module de traitement est en outre configuré pour :
exécuter un accès commuté dans le mode PPPoE ; et
après que l'accès commuté dans le mode PPPoE a échoué, déterminer que le mode d'accès Internet repasse du mode PPPoE au mode DHCP.

9. Dispositif selon l'une quelconque des revendications 6 à 8, dans lequel le module de traitement est en outre configuré pour :
s'il est déterminé que le module de réception et d'envoi ne reçoit pas le message de réponse PPPoE ou le message de réponse DHCP dans le temps défini, déterminer qu'une détection du mode d'accès Internet a échoué.

10. Dispositif selon l'une quelconque des revendications 6 à 9, dans lequel le module de réception et d'envoi est en outre configuré pour :
avec un multiple exponentiel de deux comme intervalle de temps, envoyer le message de requête PPPoE à intervalles, et avec un multiple exponentiel de deux comme intervalle de temps, envoyer le message de requête DHCP à intervalles.
